# EUROPÄISCHE PATENTSCHRIFT

(11) **EP 2 268 501 B1**
(45) Veröffentlichungstag und Bekanntmachung des Hinweises auf die Patenterteilung: **08.06.2016**
(21) Anmeldenummer: 09731482.7
(22) Anmeldetag: 17.04.2009
(51) Int. Cl.: B60N 2/58, B60N 2/50

(54) **FAHRZEUGSITZBEZUG UND FAHRZEUGSITZ MIT EINEM SOLCHEN BEZUG**
VEHICLE SEAT COVER AND VEHICLE SEAT WITH SUCH A COVER
HOUSSE POUR SIÈGE DE VÉHICULE ET SIÈGE DE VÉHICULE DOTÉ D'UNE TELLE HOUSSE

(30) Priorität: 18.04.2008 DE 102008019775; 19.11.2008 DE 102008058219
(43) Veröffentlichungstag der Anmeldung: 05.01.2011
(73) Patentinhaber: Johnson Controls GmbH, 51399 Burscheid (DE)
(72) Erfinder: ULFIG, Emanuel, 52072 Aachen (DE)
(74) Vertreter: Wolff, Felix
(86) Internationale Anmeldenummer: PCT/EP2009/002819
(87) Internationale Veröffentlichungsnummer: WO 2009/127421

(56) Entgegenhaltungen:
- EP-A- 1 186 465
- WO-A-95/03192
- GB-A- 1 153 209

## Beschreibung

Die Erfindung betrifft einen Fahrzeugsitz und einen Fahrzeugsitzbezug.
Sowohl das Sitzteil als auch das Lehnenteil können Hilfsmittel zur Veränderung ihrer ursprünglichen Kontur und/oder ihres ursprünglichen Volumens aufweisen, um den Komfort und/oder die Sicherheit zu erhöhen. So kann beispielsweise ein Sitzkissen verlängert oder ein Lehnenpolster verbreitert oder es können die Sitzkissenseitenwangen expandiert werden.

Geeignete Sitzbezüge für solche Fahrzeugsitze sind z.B. aus EP 1 186 465 A2, GB 1 153 209 A oder WO 95/03192 A1 bekannt.

Es war deshalb die Aufgabe der vorliegenden Erfindung, einen Sitzbezug zur Verfügung zu stellen, der dauerhaft die oben genannten Veränderungen mitmacht, ohne unansehnlich zu werden und das Beziehen von Fahrzeugsitzen mit veränderlichen Umrisskonturen zu vereinfachen. Auch das Reinigungsverhalten des Bezugs soll verbessert werden.

Gelöst wird die Aufgabe mit einem Fahrzeugsitzbezug nach Anspruch 1. Die vorliegende Erfindung betrifft einen Fahrzeugsitzbezug, der das Sitzteil und/oder die Rücklehne eines Fahrzeugsitzes oder einer Sitzbank, die mehreren Sitzinsassen Platz bietet, überspannt. Unter dem erfindungsgemäßen Fahrzeugsitzbezug ist in der Regel eine Polsterung, wie beispielsweise Schaumstoff, und ein Sitzrahmen angeordnet.

Bei dem Sitzbezug, der abschnittsweise eine erste Lage und eine zweite Lage aufweist, die sich in ihrer Elastizität unterscheiden, ist vorzugsweise immer eine Lage, insbesondere die Lage mit der höheren Elastizität durchgängig und die andere nur abschnittsweise vorhanden.
Bedingt durch die unterschiedliche Elastizität dehnen sich die Lagen bei derselben Kraft unterschiedlich aus.

Vorzugsweise sind die erste und die zweite Lage kraft-, form- und/oder stoffschlüssig miteinander verbunden. Vorzugsweise sind die beiden Lagen miteinander verklebt und/oder vernäht.

Vorzugsweise weist die zweite Lage eine geringere Elastizität auf als die erste Lage.

Vorzugsweise ist die Lage mit der höheren Elastizität in Bereichen angeordnet, die bei der Montage besonders gedehnt werden müssen und/oder die einer möglichen Umrissveränderung des darunter liegenden Polsters folgen müssen.

In einer weiteren bevorzugten Ausführungsform ist die zweite Lage auf der Sichtseite, dass heißt der dem Fahrzeuginsassen zugewandten Seite, angeordnet.

Weiterhin bevorzugt ist die erste Lage auf der Sichtseite angeordnet.

Die zweite Lage weist nach der Erfindung eine Wölbung auf, die, sobald der erfindungsgemäße Sitzbezug gedehnt wird, glatt gezogen wird. Vorzugsweise wird die Wölbung mit der darauf oder darunter befindlichen ersten Lage fixiert, indem die zweite Lage entsprechend kraft-, form und/oder stoffschlüssig mit dieser Verbunden wird.

Der erfindungsgemäße Sitzbezug eignet sich als Bezug sowohl für das Sitz- als auch für das Lehnenteil.

Vorzugsweise weist der erfindungsgemäße Sitzbezug zusätzlich Verstärkungsteile, insbesondere im Bereich von mechanisch hoch beanspruchten Bereichen des Sitzbezuges auf. Diese Verstärkungsteile können aus demselben Material wie die zweite Lage gefertigt sein.

Bei dem Fertigungsmaterial der zweiten Lage handelt es sich vorzugsweise um PUR.

Ein weiterer Gegenstand der vorliegenden Erfindung ist ein Fahrzeugsitz aufweisend den erfindungsgemäßen Sitzbezug.

Vorzugsweise ist dieser Fahrzeugsitz in seiner Form, von dessen Sitz- und/ oder Lehnenteil, insbesondere zu Komfort- aber auch zu Sicherheitszwecken, veränderbar.

Im Folgenden wird die Erfindung anhand der Figuren 1 - 4 erläutert. Diese Erläuterungen sind lediglich beispielhaft und schränken den allgemeinen Erfindungsgedanken nicht ein.

Es zeigen:
Fig. 1 eine Ansicht eines nicht zur Erfindung gehörenden Bezugs, betrachtet von der Sichtseite.
Fig. 2 die Rückseite des Bezuges gemäß Figur 1.
Fig. 3 eine Ansicht eines anderen, nicht zur Erfindung gehörenden Bezugs, betrachtet von der Sichtseite.
Fig. 4 eine Ansicht eines erfindungsgemäßen Bezuges gemäß einer Ausführungsform, betrachtet von der Sichtseite.

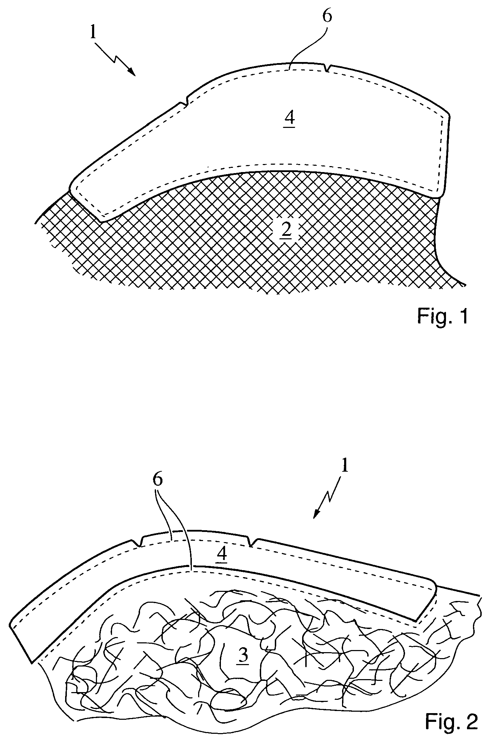

Die Figuren 1 und 2 zeigen einen Sitzbezug 1, der eine erste Lage 2 und eine zweite Lage 3 aufweist. Die äußere, dem Fahrzeuginnenraum zugewandte (Sichtseite), erste Lage 2 des Bezugs 1, ist aus einem im Wesentlichen elastisch dehnbaren Material hergestellt. Die innere, zweite Lage 3, die zwischen der äußeren ersten Lage 2 und der Polsterung angeordnet ist, ist hingegen aus einem weniger, vorzugsweise unter den normaler Weise auftretenden Kräften nicht, dehnbaren Material gefertigt. Auf der dem Fahrzeuginnenraum zugewandten Seite (Sichtseite) befindet sich in der Randzone des zweilagigen Bezugs 1 ein aufgebrachtes und fixiertes, insbesondere vernähtes Verstärkungsmaterial 4, z.B. aus PUR, dessen Oberflächeneigenschaften denen des übrigen Interieur angepasst werden kann.

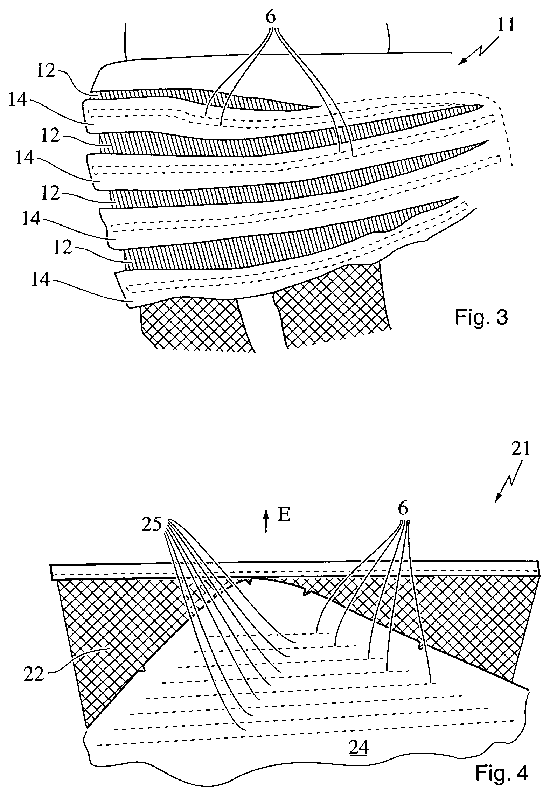

Bei dem in Figur 3 dargestellten Bezug wird auf das elastisch dehnbare Grundmaterial 12, die erste Lage, ein Verstärkungsmaterial 14 wie z.B. PUR, die zweite Lage, aufgebracht und insbesondere durch Vernähen fixiert, welches, vorzugsweise im Wesentlichen lotrecht zur Richtung des Saums, geschlitzt ist. Dadurch kann sich die erste, darunter liegende Lage elastisch reversibel verformen.

In einer, in Figur 4 dargestellten, Ausführung der Erfindung, ist das Verstärkungsmaterial 24, die zweite Lage, beispielsweise aus PUR gefertigt und quer zur elastischen Verformungsrichtung E in regelmäßige Buchten, Wölbungen 25, auf die darunter liegende elastische erste Lage 22 aufgebracht und insbesondere durch Vernähen fixiert, wobei sich die Wölbungen während der Verformung, insbesondere Dehnung, der darunter liegenden Lage reversibel glätten und dadurch eine bestimmte Längendehnung ausgleichen können.

### Bezugszeichenliste

- 1, 11, 21: Bezug
- 2, 12, 22: elastische Lage
- 3: nicht dehnbare Lage
- 4, 14, 24: Verstärkungsteil
- 25: Wölbungen
- 6: Naht
- Z: elastische Verformungsrichtung

## Patentansprüche

1. Fahrzeugsitzbezug (21), der abschnittsweise eine erste Lage (22) und eine zweite Lage (24) aufweist, die sich zumindest teilweise überlappen und sich in ihrer Elastizität unterscheiden, **dadurch gekennzeichnet, dass** die zweite Lage (24) quer zu einer Dehnungsrichtung (E) der ersten Lage (22) in regelmäßigen Wölbungen (25) auf die erste Lage (22) aufgebracht ist und bei einer Dehnung der ersten Lage (22) in die Dehnungsrichtung der ersten Lage (22) die Wölbungen (25) der zweiten Lage (24) reversibel glättbar sind

2. Fahrzeugsitzbezug (21) nach Anspruch 1, **dadurch gekennzeichnet, dass** die erste Lage (22) und die zweite Lage (24) miteinander verbunden, vorzugsweise vernäht sind.

3. Fahrzeugsitzbezug (21) nach einem der voranstehenden Ansprüche, **dadurch gekennzeichnet, dass** die zweite Lage (24) eine geringere Elastizität aufweist als die erste Lage (22).

4. Fahrzeugsitzbezug (21) nach einem der voranstehenden Ansprüche 1 - 3, **dadurch gekennzeichnet, dass** die zweite Lage (24) auf der Sichtseite angeordnet ist.

5. Fahrzeugsitzbezug (21) nach einem der voranstehenden Ansprüche 1 - 3, **dadurch gekennzeichnet, dass** die erste Lage (22) auf der Sichtseite angeordnet ist.

6. Fahrzeugsitz aufweisend den Fahrzeugsitzbezug (21) gemäß den Ansprüchen 1 bis 5.

7. Fahrzeugsitz nach Anspruch 6, **dadurch gekennzeichnet, dass** dessen Sitz- und/oder Lehnenteil in seiner Form veränderbar ist.

## Claims

1. Vehicle seat cover (21) which has, in sections, a first layer (22) and a second layer (24) which overlap at least partly and have different elasticities, **characterized in that** the second layer (24) is applied to the first layer (22) transversely with respect to an expansion direction (E) of the first layer (22) in regular bulges (25) and, in the case of expansion of the first layer (22) in the expansion direction of the first layer (22), the bulges (25) of the second layer (24) can be reversibly flattened.

2. Vehicle seat cover (21) according to Claim 1, **characterized in that** the first layer (22) and the second layer (24) are connected, preferably sewn, to one another.

3. Vehicle seat cover (21) according to one of the preceding claims, **characterized in that** the second layer (24) has a lower elasticity than the first layer (22).

4. Vehicle seat cover (21) according to one of the preceding Claims 1-3, **characterized in that** the second layer (24) is arranged on the visible side.

5. Vehicle seat cover (21) according to one of the preceding Claims 1-3, **characterized in that** the first layer (22) is arranged on the visible side.

6. Vehicle seat having the vehicle seat cover (21) according to Claims 1 to 5.

7. Vehicle seat according to Claim 6, **characterized in that** its seat part and/or backrest part can be varied in terms of its shape.

## Revendications

1. Housse pour siège de véhicule (21), présentant par sections une première couche (22) et une deuxième couche (24), qui se chevauchent au moins en partie et se distinguent de par leur élasticité, **caractérisée en ce que** la deuxième couche (24) est appliquée sur la première couche (22) transversalement à une direction d'extension (E) de la première couche (22) en courbes régulières (25) et, lors d'une extension de la première couche (22) dans la direction d'extension de la première couche (22), les courbes (25) de la deuxième couche (24) peuvent être lissées de manière réversible.

2. Housse pour siège de véhicule (21) selon la revendication 1, **caractérisée en ce que** la première couche (22) et la deuxième couche (24) sont connectées l'une à l'autre, de préférence sont cousues ensemble.

3. Housse pour siège de véhicule (21) selon l'une quelconque des revendications précédentes, **caractérisée en ce que** la deuxième couche (24) présente une plus faible élasticité que la première couche (22).

4. Housse pour siège de véhicule (21) selon l'une quelconque des revendications précédentes 1 à 3, **caractérisée en ce que** la deuxième couche (24) est disposée du côté visible.

5. Housse pour siège de véhicule (21) selon l'une quelconque des revendications précédentes 1-3, **caractérisée en ce que** la première couche (22) est disposée du côté visible.

6. Siège de véhicule présentant la housse pour siège de véhicule (21) selon les revendications 1 à 5.

7. Siège de véhicule selon la revendication 6, **caractérisé en ce que** sa partie de siège et/ou de dossier peuvent avoir une forme variable.
